# EUROPÄISCHE PATENTANMELDUNG

(11) **EP 4 049 977 A1**
(43) Veröffentlichungstag der Anmeldung: **31.08.2022**
(21) Anmeldenummer: 22157927.9
(22) Anmeldetag: 22.02.2022
(51) Int. Cl.: C02F 1/00, E03B 7/07, C02F 1/32, C02F 1/28, C02F 1/44, C02F 9/00

(54) **SICHERUNGSEINRICHTUNG ZUM SCHUTZ VON TRINKWASSER GEGEN VERSCHMUTZUNG DURCH RÜCKFLIESSEN**

(30) Priorität: 25.02.2021 DE 202021100938 U
(71) Anmelder: Pfander, Markus, 71272 Renningen (DE)
(72) Erfinder: Pfander, Markus, 71272 Renningen (DE)
(74) Vertreter: Patentanwälte Mammel und Maser PartG mbB

(57) **Zusammenfassung**

Die Erfindung betrifft eine Sicherungseinrichtung zum Schutz von Trinkwasser gegen Verschmutzung durch Rückfließen,
- mit einem Gehäuse (14), welches einen Einlass (15) zum Anschluss an ein Trinkwassernetz und einen Auslass (35) zum Anschluss eines Gerätes (52) aufweist,
- mit einem im Gehäuse (14) vorgesehenen freien Auslauf (21), dessen Zulauf (22) mit dem Einlass (15) verbunden ist, und dessen Auslauf (25) zu einer Pumpe (30) führt, welche das im freien Auslauf (21) drucklos bevorratete Speisewasser in einen Druckausgleichsbehälter (33) pumpt, und
- mit einer vom Druckausgleichsbehälter (33) zum Auslass (35) führenden Leitung (34), wobei
- ein Druckschalter (38) in der Leitung (34) zwischen dem Druckausgleichsbehälter (33) und dem Auslass (35) vorgesehen ist.

## Beschreibung

Die Erfindung betrifft eine Sicherungseinrichtung zum Schutz von Trinkwasser gegen Verschmutzung durch Rückfließen.

Zum Schutz des Trinkwassers vor Verunreinigungen in Trinkwasser-Installationen müssen Kleinstwasserbehandlungsgeräte (wie z.B. Umkehrosmose-Anlagen, Ionenaustauscher-Systeme, Aktivkohle- und Feinfiltergeräte < 80 µm), Sterilisatoren für Labor- und Dampfdesinfektion und Zahnarztbehandlungsstühle die allgemeinen Anforderungen der DIN EN 1717 und der DIN 1988-100 erfüllen.

Die DIN EN 1717 "Schutz des Trinkwassers vor Verunreinigungen in Trinkwasser-Installationen und allgemeine Anforderungen an Sicherungseinrichtungen zur Verhütung von Trinkwasserverunreinigungen durch Rückfließen; Deutsche Fassung EN 1717:2000; Technische Regel des DVGW" und die DIN 1988-100 "Technische Regeln für Trinkwasser-Installationen - Teil 100: Schutz des Trinkwassers, Erhaltung der Trinkwassergüte; Technische Regel des DVGW", die beide gemeinsam anzuwenden sind, stellen allgemeine Anforderungen an eine Sicherungseinrichtung zur Verhütung von Trinkwasserverunreinigungen durch Rückfließen.

Innerhalb dieser Geräte besteht die latente Gefahr einer Verkeimung, und daher wird das Wasser in diesen Systemen nach DIN EN 1717 und DIN 1988-100 der Flüssigkeitskategorie 5 zugeordnet. Deshalb dürfen diese Systeme nur über eine Sicherungseinrichtung an die Trinkwasser-Installation angeschlossen und betrieben werden. Diese Sicherungseinrichtungen sind mit einem freien Auslauf der Familie A, Typ A, der Familie A, Typ B oder der Familie A, Typ D auszubilden.

Allgemein wird ein freier Auslauf in der DIN EN 1717: 2011-08 wie folgt definiert: "Ein freier Auslauf ist eine ständig ungehinderte freie Fließstrecke, entweder außerhalb oder innerhalb des versorgten Apparates/Behälters zwischen der zulaufseitigen Austrittsöffnung der Trinkwasser-Installation und dem ablaufseitigen Prozessfluids, gemessen bei maximalen Betriebswasserspiegel." Dabei wird an die Funktion folgende Anforderungen gestellt: "Das Rückfließen von verunreinigter Flüssigkeit in die Trinkwasser-Installation ist durch die ständig ungehinderte freie Fließstrecke zu verhindern." (DIN EN 1717:2011,08, Seite 17)

Dieser freie Auslauf umfasst einen Zulauf in einen Behälter, wobei dessen Austrittsöffnung oberhalb und getrennt zu einem Betriebswasserspiegel in dem Behälter liegen muss. Zur Regulierung der Höhe des Betriebswasserspiegels ist eine Abschalteinrichtung vorgesehen, so dass zwischen dem kritischen Betriebswasserspiegel und der Austrittsöffnung des Zulaufs mindestens ein Abstand verbleibt, der bei einem freien Auslauf der Familie A, Typ B dem zweifachen des Innendurchmessers des Zuleitungsrohres entspricht jedoch mindestens 20 mm beträgt. Der kritische Betriebswasserspiegel ist bei einem freien Auslauf mit nicht kreisförmigem Überlauf (uneingeschränkt) der Familie A, Typ B gemäß DIN EN 13077: 2018-06 (Seite 6) wie folgt definiert: "Physikalische oder piezometrische Höhe, die die Flüssigkeit in einem beliebigen Teil der Einrichtung 2 s nach dem Schließen des Wasserzulaufs, ausgehend vom maximalen Wasserspiegel, erreicht." Dabei ist der maximale Wasserspiegel der Überlauf-Wasserspiegel im nicht kreisförmigen und eingeschränkten Überlauf des Vorratsbehälters. Bei einem freien Auslauf der Familie A, Typ A ist der kritische Wasserspiegel der maximale Wasserspiegel, der bei Überlauf erreicht wird.

Die Anforderungen an eine solche Sicherungseinrichtung ist gemäß der DIN 1988-100 in Verbindung mit der DIN EN 1717 dann erfüllt, wenn Sicherheitsarmaturen verwendet werden, deren Eignung beispielsweise durch ein DVGW-Zertifizierungszeichen nachgewiesen ist. Apparate, bei denen nicht nachgewiesen ist, dass deren Inhalt nicht in die Trinkwasser-Installation zurückfließen kann, dürfen nur unter Zwischenschaltung von solchen geprüften Sicherungseinrichtungen an die Trinkwasser-Installation angeschlossen werden.

Bisher bekannte Wasseraufbereitungsgeräte, wie beispielsweise Umkehrosmose-Anlagen oder Ionenaustauscher-Systeme werden oftmals direkt an das Trinkwassernetz angeschlossen. Zwischen dem Trinkwassernetz und der Wasserbehandlungsgeräte wird häufig ein Absperrhahn vorgesehen, der zumeist dauerhaft geöffnet ist und nur im Service-Falle des Wasserbehandlungsgerätes geschlossen wird. Zusätzlich ist in manchen Absperrventilen auch ein Rückschlagventil integriert oder wird zusätzlich ein Rückschlagventil in den Zuleitungsschlauch installiert. Dennoch kann es bei dieser nicht konformen Betriebsweise aufgrund eines Druckabfalls im Trinkwassernetz zu einem Rücksaugen oder Rückdrücken oder bei einem längeren Stillstand des Wasseraufbereitungsgerätes zu einer Verkeimung innerhalb des Gerätes kommen, wodurch das Trinkwasser durch Bestandteile der Wasseraufbereitungsgeräte durch Keime kontaminiert werden kann.

Der Erfindung liegt die Aufgabe zugrunde, eine Sicherungseinrichtung sowie ein Verfahren vorzuschlagen, welche einen sicheren Betrieb von mit Trinkwasser zu versorgenden Geräten ermöglicht und eine Trinkwasserverunreinigung durch ein Rückfließen aus der Sicherungseinrichtung in die an die Sicherungseinrichtung angeschlossene Trinkwasserleitung verhindert.

Diese Aufgabe wird durch eine Sicherungseinrichtung gemäß den Merkmalen des Anspruchs 1 gelöst. Diese Sicherungseinrichtung umfasst ein Gehäuse, welches einen Einlass zum Anschluss an ein Trinkwassernetz und einen Auslass zum Anschluss von zumindest einem Gerät, insbesondere ein Wasseraufbereitungsgerät oder ein Sterilisator, aufweist. In dem Gehäuse ist ein freier Auslauf vorgesehen, dessen Zulauf mit dem Einlass verbunden ist und dessen Auslauf zu einer Pumpe führt, welche das in dem freien Auslauf drucklos bevorratete Speisewasser, auch Betriebswasser genannt, in einen Druckausgleichsbehälter pumpt. Der anliegende Druck in dem Druckausgleichsbehälter wird mit einem Druckschalter überwacht, der zwischen dem Druckausgleichsbehälter und dem Auslass am Gehäuse zum Anschluss des Wasseraufbereitungsgerätes vorgesehen ist. Diese Sicherungseinrichtung weist somit den Vorteil auf, dass die Sicherungseinrichtung auf einen Betriebsdruck für das jeweils daran angeschlossene Wasseraufbereitungsgerät überwachbar und steuerbar ist. Darüber hinaus ist durch den freien Auslauf sichergestellt, dass ein Rückfließen des Speisewassers aus der Sicherungseinrichtung oder aus dem an die Sicherungseinrichtung angeschlossenen Gerät in eine Trinkwasserleitung verhindert wird.

Bevorzugt ist vorgesehen, dass der Druckschalter in der Sicherungseinrichtung auf einen Betriebsdruck, vorzugsweise in einem Bereich zwischen 2 und 8 bar, für das anschließbare Wasseraufbereitungsgerät einstellbar ist. Somit kann eine individuelle Ansteuerung der angeschlossenen Wasseraufbereitungsgeräte ermöglicht sein. Bei einem Wasseraufbereitungsgerät, wie beispielsweise bei einer Umkehrosmose-Anlage, sind relativ hohe Abschaltdrücke erforderlich, die beispielsweise im Bereich von 7 bar liegen. Bei Wasseraufbereitungsgeräten, wie beispielsweise Ionenaustauscher-Anlagen oder auch Sterilisatoren, genügen meistens niedrige Betriebs- und Abschaltdrücke, wie beispielsweise 2 bar.

Des Weiteren ist bevorzugt vorgesehen, dass beim Erreichen eines Solldrucks in der Leitung, also zwischen dem Druckausgleichsbehälter und dem Auslass, der Druckschalter die Pumpe stillsetzt oder bei einem Abfall des Drucks in der zum Auslass führenden Leitung und bei Erreichen eines Rückschaltpunktes des Druckschalters die Pumpe der Sicherungseinrichtung wieder aktiviert. Die Pumpe fördert Speisewasser aus dem freien Auslauf in den Druckausgleichsbehälter. Dadurch kann der erforderliche Betriebsdruck in dem Druckausgleichsbehälter aufgebaut und bereitgestellt werden. Dies ermöglicht, dass bei Anforderung eines Speisewassers für das angeschlossene Wasseraufbereitungsgerät sofort eine Versorgung möglich ist.

Eine weitere bevorzugte Ausführungsform der Sicherungseinrichtung sieht vor, dass ein Manometer mit dem Druckschalter verbunden ist. Bevorzugt ist das Manometer an einer Gehäusewand des Gehäuses vorgesehen. Dadurch kann in einfacher Weise eine Überwachung des Betriebsdrucks für das Wasseraufbereitungsgerät ermöglicht werden.

Gemäß einer weiteren Ausführungsform der Sicherungseinrichtung ist vorgesehen, dass zwischen dem Einlass und dem Zulauf des freien Auslaufs ein Druckschalter vorgesehen ist, der den Eingangsdruck des Trinkwassernetzes überwacht. Dies ermöglicht, dass bei einem Absinken des Drucks im Trinkwassernetz unter einem vorgegebenen Mindestdruck von beispielsweise 0,8 bar oder bei einem kompletten Ausfall der Trinkwasserversorgung - beispielsweise durch ein versehentliches Abstellen der Wasserversorgung der Sicherungseinrichtung durch den Betreiber - eine dem freien Auslauf nachgeschaltete Pumpe stillgesetzt wird. Dadurch kann ein Trockenlaufen der Pumpe verhindert sein.

Des Weiteren ist bevorzugt vorgesehen, dass der freie Auslauf ein Schwimmersystem umfasst, welches einen Abstand zwischen einer Austrittsöffnung des Zulaufs und einem Betriebswasserspiegel im Behälter des freien Auslaufs überwacht und vorzugsweise das Schwimmersystem mit einem Schwimmerventil zur Ansteuerung des Zulaufs ausgebildet ist. Durch den Einsatz des Schwimmersystems kann in einfacher Weise sichergestellt werden, dass der Betriebswasserspiegel getrennt und unterhalb der Austrittsöffnung des Zulaufs sich befindet, um einen Rückfluss des Speisewassers im Behälter über den Zulauf in das Trinkwassernetz zu verhindern.

Vorteilhafterweise umfasst das Schwimmersystem ein Schwimmerventil zur Ansteuerung des Zulaufs bzw. zum Öffnen und Schließen des Zulaufs. Dieses Schwimmerventil weist den Vorteil auf, dass kein schlagartiges Öffnen und Schließen, sondern ein kontinuierliches bzw. gedämpftes Öffnen und Schließen des Zulaufs erfolgt. Dadurch wird Spritzwasser im Behälter des freien Auslaufs verhindert. Dieses Spritzwasser kann zur Schimmelbildung führen.

Des Weiteren ist bevorzugt vorgesehen, dass der freie Auslauf eine Ansauglanze als Ablauf aufweist, welche eine Eintrittsöffnung nahe dem Boden des Behälters und oberhalb des Zulaufs eine Austrittsöffnung aufweist. Dadurch kann selbst bei niedrigem Betriebswasserspiegel ein kontinuierliches Absaugen des Speisewassers über die Pumpe erfolgen.

Eine weitere bevorzugte Ausgestaltung der Sicherungseinrichtung sieht vor, dass zwischen dem Druckausgleichsbehälter und dem Auslass in der zwischenliegenden Leitung zumindest ein Filter vorgesehen ist. Dies ermöglicht eine Aufbereitung des Speisewassers.

Bevorzugt ist vorgesehen, dass der Filter in der Leitung zwischen dem Druckausgleichsbehälter und dem Auslass beispielsweise als ein Sedimentfilter, als ein Aktivkohlefilter und/oder als ein mit einer UV-Lampe betriebener Filter ausgebildet ist. Dadurch besteht des Weiteren eine Desinfektionsmöglichkeit, bevor das Speisewasser dem daran angeschlossenen Gerät, insbesondere dem Wasseraufbereitungsgerät oder dem Sterilisator, zugeführt wird.

Des Weiteren ist bevorzugt vorgesehen, dass die Komponenten im Gehäuse mit einer Steuerung überwachbar und/oder ansteuerbar sind und vorzugsweise eine Schnittstelle zur drahtlosen oder kabelgebundenen Ausgabe von Daten vorgesehen ist. Dies ermöglicht eine einfache Analyse und Überwachung der Sicherungseinrichtung. Darüber hinaus kann im Servicefall ein einfaches Auslesen von Daten erfolgen und der Zustand der Sicherungseinrichtung oder ein Schadensfall schnell erkannt werden.

Eine weitere bevorzugte Ausgestaltung der Sicherungseinrichtung sieht vor, dass an dem Gehäuse eine Anzeige für einen Betriebszustand der Sicherungseinrichtung, für einen Schaltzustand des freien Auslaufs, für einen anliegenden Druck des Trinkwassers, für einen Betriebszustand der Pumpe und/oder einen Füllstand des Druckausgleichsbehälters vorgesehen ist. Dadurch kann für den Benutzer eine einfache Erfassung und Überprüfung des aktuellen Zustands der Sicherungseinrichtung ermöglicht werden.

Nach einer weiteren bevorzugten Ausgestaltung der Sicherungseinrichtung ist vorgesehen, dass zwischen dem Auslass und einem Anschluss für das Wasseraufbereitungsgerät ein Ablassventil vorgesehen ist. Dadurch kann eine kontrollierte Entleerung des angeschlossenen Wasseraufbereitungsgeräts und/oder der Sicherungseinrichtung vor der Demontage oder vor einem Anschluss eines neuen oder anderweitigen Wasseraufbereitungsgerätes ermöglicht werden.

Des Weiteren ist bevorzugt vorgesehen, dass der Einlass und/oder der Auslass am Gehäuse durch Steckschlauchverbinder ausgebildet sind. Solche Steckschlauchverbinder ermöglichen einen schnellen Anschluss als auch ein Lösen ohne zusätzliche Montagehilfsmittel.

Bevorzugt wird die Sicherungseinrichtung mit einer sicheren Niederspannung von 24 VAC oder VDC betrieben. Dadurch kann auf eine CE-Kennzeichnung verzichtet werden.

Die der Erfindung zugrunde liegende Aufgabe wird durch ein Verfahren gelöst, bei dem zwischen einem Anschluss an ein Trinkwassernetz und einen Vorratsbehälter oder einen Verbraucher eine Sicherheitseinrichtung nach einer der vorgeschriebenen Ausführungsformen eingesetzt wird und ein Rückfließen von Trinkwasser aus der Sicherheitseinrichtung in die Trinkwasserleitung verhindert wird.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigt:

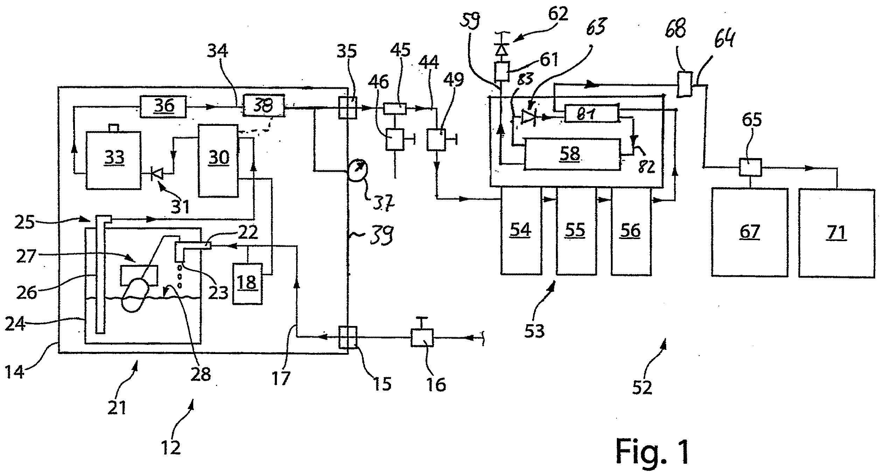

- Figur 1: eine schematische Darstellung einer Sicherungsein-richtung mit einem angeschlossenen Gerät.

In Figur 1 ist eine schematische Ansicht einer Sicherungseinrichtung 12 zum Schutz von Trinkwasser gegen Verschmutzung durch Rückfließen dargestellt. An diese Sicherungseinrichtung 12 ist ein Gerät 52, insbesondere ein Wasseraufbereitungsgerät, oder ein Sterilisator oder ein sonstiges Gerät anschließbar. Im Ausführungsbeispiel ist als Wasseraufbereitungsgerät 52 eine Umkehrosmose-Anlage vorgesehen und nachfolgend beispielhaft näher beschrieben.

Die Sicherungseinrichtung 12 umfasst ein Gehäuse 14, in welchem ein Einlass 15 zum Anschluss an ein Trinkwassernetz vorgesehen ist. Vorteilhafterweise kann stromauf des Einlasses 15 noch ein Absperrventil 16 vorgesehen sein. Von dem Einlass 15 führt eine Leitung 17 zu einem freien Auslauf 21. Vorzugsweise ist zwischen dem Einlass 15 und dem freien Auslauf 21 ein Druckschalter 18 vorgesehen. Dieser Druckschalter 18 überprüft einen anstehenden Druck aus dem Trinkwassernetz. Bei einem Absinken des Drucks im Trinkwassernetz unter einem im Druckschalter 18 definierten Mindestdruck, der beispielsweise ca. 0,8 bar betragen kann oder bei einem kompletten Ausfall der Trinkwasserversorgung, kann eine dem freien Auslauf 21 nachgeschaltete Pumpe 30 stillgesetzt werden. Dadurch wird ein Trockenlaufen der Pumpe 30 verhindert. Dieser Druckschalter 38 kann auch für die Schaltung einer optionalen LED-Betriebskontrollleuchte zur visuellen Leitungswasserkontrolle dienen.

Der freie Auslauf 21 umfasst einen Zulauf 22 mit einem Mengenregler, der das Trinkwasser über eine Austrittsöffnung 23 des Zulaufs 22 in einen Wasservorratsbehälter 24 überführt. In dem Behälter 24 ist ein Auslauf 25 vorgesehen. Dieser Auslauf 25 umfasst eine Auslauflanze 26, deren Eintrittsöffnung nahe am Boden des Behälters 24 liegt und deren Austrittsöffnung außerhalb des Behälters 24, insbesondere oberhalb des Zulaufs 22, vorgesehen ist. Alternativ kann der Auslauf 25 auch am Behälter 24 knapp oberhalb des Behälterbodens angebracht werden. In dem Behälter 24 ist ein Schwimmersystem 27, vorzugsweise eine mechanische Schwimmereinrichtung vorgesehen, durch welches ein Betriebswasserspiegel 28 in dem Behälter 24 überwacht wird. Dabei wird der Zulauf 22 ab einer vorbestimmten Höhe des Betriebswasserspiegels 28, vorzugsweise durch eine zunehmende, nicht schlagartige Schließbewegung, abgeschaltet. Zwischen dem maximalen Betriebswasserspiegel 28 und der Austrittsöffnung 23 des Zulaufs 22 muss ein Mindestabstand verbleiben, so dass eine Entkopplung zu dem im Behälter 24 bevorrateten Speisewasser und der angeschlossenen Trinkwasserleitung gegeben ist.

Über die Pumpe 30, welche bevorzugt eine elektrische Saugpumpe ist, wird das im Behälter 24 gesammelte Speisewasser angesaugt und nachfolgend einem Druckausgleichsbehälter 33 zugeführt. Dieser Druckausgleichsbehälter 33 ermöglicht, dass durch die Pumpe 30 veranlasste Druckstöße in der Sicherungseinrichtung 12 verhindert werden. Dadurch können schlagende Druckschläuche, die zur Verbindung einzelner Komponenten eingesetzt werden, verhindert werden. Zwischen der Pumpe 30 und dem Druckausgleichsbehälter 33 ist bevorzugt ein Rückschlagventil 31 vorgesehen, so dass über den Druckausgleichsbehälter 33 kein Druck auf die Pumpe 30 zurückwirkt und dadurch das Speisewasser wieder in den Behälter 24 zurückfließt und dieser dann evtl. überlaufen kann. Diese Pumpe 30 ist bevorzugt als eine Druckerhöhungspumpe ausgebildet, um das im Behälter 24 mit Umgebungsdruck vorliegende Speisewasser im Druckausgleichsbehälter 33 auf einen Druckbereich zwischen beispielsweise 2 bis max. 8 bar zu erhöhen. Umkehrosmose-Anlagen benötigen im Vergleich zu anderen Wasseraufbereitungsgeräten 52 für den Betrieb einen Betriebsdruck von mindestens 3 bar. Je höher der Betriebsdruck desto höher die Produktionsrate der Umkehrosmose-Membran, desto besser ist der Wirkungsgrad und desto höher die Reinheit des Permeats.

Ausgehend von dem Druckausgleichsbehälter 33 führt eine weitere Leitung 34 zum Auslass 35 am Gehäuse 14. Vorzugsweise ist zwischen dem Druckausgleichsbehälter 33 und dem Auslass 35 zumindest ein Filter 36 vorgesehen. Bei diesem Filter 36 kann es sich beispielsweise um einen Sedimentfilter und/oder Aktivkohlefilter und/oder eine UV-Lampe und/oder einen Bakterienfilter handeln. Dadurch können evtl. vorhandene Verunreinigungen im Speisewasser entfernt werden.

Die Sicherungseinrichtung 12 umfasst des Weiteren in der Leitung 34 einen Druckschalter 38. Dieser Druckschalter 38 ist bevorzugt in der Leitung 34 vor dem Auslass 35 angeordnet. Insbesondere ist der Druckschalter 38 zwischen dem Filter 36 und dem Auslass 35 vorgesehen. Dieser Druckschalter 38 überwacht den Druck in der Leitung 34 bzw. den Betriebsdruck in dem Druckausgleichsbehälter 33. Bevorzugt ist der Druckschalter 38 mit einem Manometer 37 verbunden. Dieses Manometer 37 kann an einer Gehäusewand 39 des Gehäuses 14 von außen sichtbar vorgesehen sein. Dies ermöglicht ein einfaches Ablesen des vorherrschenden Betriebsdrucks bzw. des Arbeitsdruckes der Pumpe in der Sicherungseinrichtung 12. Diese Information ist beispielsweise im Service-Fall von Vorteil.

Dieser Druckschalter 38 ist bevorzugt auf verschiedene Betriebsdrücke einstellbar, die einen ordnungsgemäßen Betrieb von dem an die Sicherungseinrichtung 12 angeschlossenen Wasseraufbereitungsgerät 52 ermöglicht. Dabei kann der Druckschalter 38 auf einen Solldruckwert zum Stillsetzen der Pumpe 30 eingestellt werden, sobald in der Leitung 34 bzw. am Auslass 35 ein Betriebsdruck zwischen 2 bis 8 bar anliegt. Die Hysterese des Druckschalters 38 bestimmt den Rückschaltpunkt, das heißt, dass bei einem Abfall des Drucks in der Leitung 34 und bei Erreichen dieses Rückschaltpunktes ein Steuersignal zum Wiedereinschalten der Pumpe 30 erzeugt wird.

Dieser Druckschalter 38 und die Pumpe 30 stehen mit einer elektrischen Leitung in Verbindung, welche strichliniert dargestellt ist. Eine optionale LED-Betriebskontrollleuchte zeigt dem Anwender an, ob die Sicherungseinrichtung 12 produziert oder stillsteht.

An dem Auslass 35 der Sicherungseinrichtung 12 ist eine Zuführleitung 44 anschließbar. Diese Zuführleitung 44 weist einen Abzweig 45 auf, der zu einem Serviceventil 46 führt, um eine kontrollierte Entleerung und eine Entlüftung der Sicherungseinrichtung 12 vorzunehmen.

Das Wasseraufbereitungsgerät 52 ist mit der Zuführleitung 44 zu der Sicherungseinrichtung 12 verbunden. Vorteilhafterweise kann in der Zuführleitung 44 eingangsseitig zum Wasseraufbereitungsgerät 52 ein vorzugsweise manuell betätigbares Absperrventil 49 vorgesehen sein.

Die Sicherungseinrichtung 12 und das daran angeschlossene Wasseraufbereitungsgerät 52 sind bevorzugt durch eine als Druckschlauch ausgebildete Zuführleitung 44 miteinander verbunden. In weiteren Anwendungsfällen können auch mehrere an dem Druckschlauch angeschlossene Anschlüsse für jeweils ein Gerät 52 zum Anschluss an der Sicherungseinrichtung 12 vorgesehen sein. Auch die Anschlussleitung für das Trinkwasser an die Sicherungseinrichtung 12 kann als Druckschlauch ausgebildet sein. Bevorzugt werden farbcodierte Druckschläuche verwendet. Die Anschlüsse der Sicherungseinrichtung 12 und des Wasseraufbereitungsgerätes 52 sind bevorzugt in Form von Steckschlauchverbindern, insbesondere Quick-Connect-Schlauchverbinder, ausgebildet. Dies ermöglicht, dass die Sicherungseinrichtung 12 und das Wasseraufbereitungsgerät 52 getrennt und unabhängig voneinander geliefert und vor Ort in einfacher Weise und schnell installiert werden können. Auch ermöglicht dies, dass verschiedene Wasseraufbereitungsgeräte 52 an die selbe Sicherungseinrichtung 12 in einfacher Weise anschließbar sind.

Das Wasseraufbereitungsgerät 52 ist im Ausführungsbeispiel gemäß Figur 1 eine Umkehrosmose-Anlage ohne elektrischen Komponenten, so dass im Folgenden der Aufbau dieser Umkehrosmose-Anlage 52 näher beschrieben wird.

Die Umkehrosmose-Anlage 52 umfasst bevorzugt eine Filtergruppe 53 zum Schutz von mindestens einer Umkehrosmose-Membran mit aufeinanderfolgenden Filterstufen. Eine erste Filterstufe kann durch einen Sedimentfilter 54 mit einem Grobfiltersieb, beispielsweise mit 20 Mikron, ausgebildet sein. Die darauffolgende zweite Filterstufe kann als ein Aktivkohlefilter 55 ausgebildet sein. Die wiederum nachfolgende dritte Filterstufe kann als Sedimentfilter 56 mit einem Feinfiltersieb, beispielsweise 5 Mikron, ausgebildet sein. Die Zuführleitung 44 führt aus der Filtergruppe 53 heraus zu einem Eingang in eine Leitungswasserkammer eines automatischen Abschaltventils 81 (ASOV = automatic shut-off va-Ive). Von einem Ausgang der Leitungswasserkammer des Abschaltventils 81 zweigt eine Leitung 82 ab, die zu einem oder mehreren Membrangehäusen 58 mit einer Umkehrosmose-Membran führt, welche eine vierte Filterstufe darstellen kann. Von dem Membrangehäuse 58 zweigt zum einen eine in eine Permeat-Kammer des Abschaltventils 81 führende Leitung 83 ab. In dieser Leitung 83 ist ein Rückschlagventil 63 vorgesehen, so dass das dem Abschaltventil 81 zugeführte Permeat nicht mehr in das Membrangehäuse 58 zurückfließen kann. Vom Membrangehäuse 58 zweigt des Weiteren ein Ablauf 59 ab, der zu einem Durchflussbegrenzer 61 und nachfolgend einem optionalen Rückschlagventil 62 umfasst, um das in dem Membrangehäuse 58 erzeugte Abwasser abzuführen.

Aus einem Ausgang der Permeat-Kammer des Abschaltventils 81 führt eine Permeatleitung 64 heraus, welche durch die Leitung 83 mit Permeat versorgt wird. Diese Permeatleitung 64 führt das Permeat bis zu einem Verbindungsanschluss 65, insbesondere T-Verbinder, an welchem ein Vorratsbehälter 67 und ein Verbraucher 71 angeschlossen sind. Bei dem Verbraucher 71 kann es sich beispielsweise um einen Sterilisator (Autoklaven), einem Zapfhahn für Trinkwasserzwecke, einem Reinigungs- und Desinfektionsgerät (RDG oder auch Thermodesinfektor genannt) oder einem Wasserspender bei Zahnarztstühlen oder dergleichen handeln.

Zwischen dem Abschaltventil 81 und dem Verbindungsanschluss 65 kann bevorzugt eine Vollentsalzungspatrone 68 vorgesehen sein. Alternativ kann diese zumindest eine Vollentsalzungspatrone 68 auch zwischen dem Vorratsbehälter 67 und dem Verbraucher 71 installiert werden. Alternativ kann die Vollentsalzungspatrone auch in die Umkehrosmose-Anlage integriert werden. Dadurch kann das Permeat vollständig von Restmineralien befreit werden, wodurch vollentsalztes Wasser, auch VE-Wasser genannt, produziert werden kann.

Der Vorratsbehälter 67 umfasst bevorzugt ein Vorratsbehälter-Ventil und nimmt ein Permeat bzw. VE-Wasser unter Druck auf. Bei Betrieb des Verbrauchers 71 wird zunächst aus dem Vorratsbehälter 67 das Permeat bzw. VE-Wasser bereitgestellt, bis die Sicherungseinrichtung 12 gestartet ist und Permeat in der Umkehrosmose-Anlage 52 erzeugt.

Zum Betrieb der Sicherungseinrichtung 12 ist das Absperrventil 16 geöffnet und die Pumpe 30 startet, nachdem der Druck in der Leitung 34 den Rückschaltpunkt des Druckschalters 38 der Sicherungseinrichtung 12 erreicht hat. Dann saugt die Pumpe 30 aus dem freien Auslauf 21 Speisewasser an und stellt dieses mit einem erhöhten Druck in dem Druckausgleichsbehälter 33 bereit. Von dort aus kann das unter Druck stehende Speisewasser bei einem geöffneten Absperrventil 49 über den Auslass 35 zur Filtergruppe 53 und über das Abschaltventil 81 zum Membrangehäuse 58 gelangen. Eine Membran im Membrangehäuse 58 entfernt über 90 % aller gelösten Teilchen im Wasser. Das Permeat fließt über die Leitung 83 und das Abschaltventil 81 sowie der Permeatleitung 64 zum Vorratsbehälter 67. Bei einem geschlossenen Verbraucher 71 wird der Vorratsbehälter 67 nach und nach gefüllt und der Druck im Vorratsbehälter 67 steigt exponentiell an und wirkt auf das Abschaltventil 81 zurück. Das Abschaltventil 81 schließt bei Erreichen eines stabilen Druckverhältnisses zwischen dem anstehenden Druck aus dem Druckausgleichsbehälter 33 über die Leitung 44 und dem Vorratsbehälterdruck in der Permeatleitung 64. In der Regel schließen hydraulische Abschaltventile 81, wenn der Druck in der Permeat-Kammer des Abschaltventils 81 zwischen 60 % und 70 % des Eingangsdruckes der LeitungswasserKammer des Abschaltventils 81 beträgt. Dabei ist zu beachten, dass die Hysterese der automatischen Abschaltventile 81 herstellerspezifisch ist. Nach Schließen des Abschaltventiles 81 baut die Pumpe 30 weiter Druck im Druckausgleichsbehälter 33 auf. Dieser erzeugte Druck liegt am Eingang des Abschaltventils 81 an und wird durch das Manometer 37 angezeigt und durch den Druckschalter 38 erfasst. Sobald ein eingestellter Abschaltdruck erreicht wird, schaltet dieser Druckschalter 38 die Pumpe 30 ab, das heißt, der Druckschalter 38 setzt die Pumpe 30 still. Dabei erlischt dann die optionale LED-Betriebskontrollleuchte für die Produktion. Aufgrund des Stillsetzens der Pumpe 30 in der Sicherungseinrichtung 12 wird kein weiteres Speisewasser aus dem freien Auslauf 21 herausgefördert. Bei einer weiteren Zuführung des Trinkwassers wird nach Einnahme eines definierten Betriebswasserspiegels 28 durch das Schwimmersystem 27 der Zulauf 22 automatisch abgeschaltet.

Sobald der Verbraucher 71 geöffnet bzw. betätigt wird, kann der Verbraucher 71 zunächst mit dem im Vorratsbehälter 67 bevorrateten Permeat bzw. VE-Wasser versorgt werden. Gleichzeitig sinkt jedoch der Druck in der Permeatleitung 64, welcher vom Abschaltventil 81 erkannt wird. Bei einem weiteren Absinken des Druckes in der Permeatleitung 64 öffnet das hydraulische Abschaltventil 81 den Eingang zur Leitungswasser-Kammer und die Umkehrosmose-Anlage beginnt dann mit der Permeat-Produktion. Dadurch sinkt der Druck im Druckausgleichsbehälter 33 und in der Leitung 49 stetig. Sobald dieser anliegende Druck den Rückschaltpunkt des Druckschalters 38 erreicht, werden die Pumpe 30 und die optionale LED-Betriebskontrollleuchte für die Produktion eingeschalten, wodurch aus dem freien Auslauf 21 Speisewasser durch die Pumpe 30 abgesaugt und mit Überdruck in den Druckausgleichsbehälter 33 gefördert wird und von dort aus zum Membrangehäuse 58.

Sofern im Betrieb der Sicherungseinrichtung 12 es zu einem Druckabfall im Trinkwassernetz oder zu einem Ausfall der Trinkwasserversorgung kommt, wird durch den Druckschalter 18 der Druckabfall erkannt oder erfasst. Dies hat zur Folge, dass der freie Auslauf 21 nicht mehr mit hinreichender Menge an Trinkwasser versorgt wird, um einen Mindestbetriebswasserspiegel 28 bereitzustellen. Bei einem solchen Druckabfall wird die Pumpe 30 zur Sicherung der Wasseraufbereitungsanlage 11 durch den Druckschalter 18 abgeschaltet und ebenso werden die optionalen LED-Betriebskontrollleuchten für das Leitungswasser und zusätzlich die LED für die Produktion ausgeschalten.

Durch diese Sicherungseinrichtung 12 ist ermöglicht, dass geringe Fließraten zur Bereitstellung von Speisewasser am Auslass 35 bereitgestellt werden. Dabei wird die Fließrate durch die Leistung der Pumpe 30 determiniert.

## Patentansprüche

1. Sicherungseinrichtung zum Schutz von Trinkwasser gegen Verschmutzung durch Rückfließen,
- mit einem Gehäuse (14), welches einen Einlass (15) zum Anschluss an ein Trinkwassernetz und einen Auslass (35) zum Anschluss eines Gerätes (52) aufweist,
- mit einem im Gehäuse (14) vorgesehenen freien Auslauf (21), dessen Zulauf (22) mit dem Einlass (15) verbunden ist, und dessen Auslauf (25) zu einer Pumpe (30) führt, welche das im freien Auslauf (21) drucklos bevorratete Speisewasser in einen Druckausgleichsbehälter (33) pumpt, und
- mit einer vom Druckausgleichsbehälter (33) zum Auslass (35) führenden Leitung (34),
**dadurch gekennzeichnet,**
- **dass** ein Druckschalter (38) in der Leitung (34) zwischen dem Druckausgleichsbehälter (33) und dem Auslass (35) vorgesehen ist.

2. Sicherungseinrichtung nach Anspruch 1, **dadurch gekennzeichnet, dass** der Druckschalter (38) auf einen Betriebsdruck für das anschließbare Gerät (52), der vorzugsweise in einem Bereich zwischen 2 und 8 bar liegt, einstellbar ist.

3. Sicherungseinrichtung nach Anspruch 1 oder 2, **dadurch gekennzeichnet, dass** der Druckschalter (38) beim Erreichen eines Solldruckwerts in der Leitung (34) die Pumpe (30) stillsetzt oder bei einem Abfall des Drucks in der Leitung (34) und beim Erreichen eines Rückschaltpunktes des Druckschalters (38) die Pumpe (30) wieder aktiviert, die das Speisewasser aus dem freien Auslauf (21) absaugt.

4. Sicherungseinrichtung nach einem der vorhergehenden Ansprüche, **dadurch gekennzeichnet, dass** ein Manometer (37) mit der Leitung (34) oder mit dem Druckschalter (38) verbunden ist, und vorzugsweise an einer Gehäusewand (39) des Gehäuses (14) vorgesehen ist.

5. Sicherungseinrichtung nach einem der vorhergehenden Ansprüche, **dadurch gekennzeichnet, dass** zwischen dem Einlass (15) und dem Zulauf (22) des freien Auslaufs (21) ein Druckschalter (18) vorgesehen ist, welcher einen Eingangsdruck des Trinkwassers im Trinkwassernetz überwacht.

6. Sicherungseinrichtung nach einem der vorhergehenden Ansprüche, **dadurch gekennzeichnet, dass** der freie Auslauf (21) ein Schwimmersystem (27) umfasst, welches einen Abstand zwischen einer Austrittsöffnung (23) des Zulaufs (22) und einem Betriebswasserspiegel (28) im Behälter (24) des freien Auslaufs (21) überwacht.

7. Sicherungseinrichtung nach Anspruch 6, **dadurch gekennzeichnet, dass** das Schwimmersystem (27) ein Schwimmerventil zur Ansteuerung des Zulaufs (22) aufweist.

8. Sicherungseinrichtung nach einem der vorhergehenden Ansprüche, **dadurch gekennzeichnet, dass** der freie Auslauf (21) eine Ansauglanze (26) als Auslauf (25) aufweist, welche eine Eintrittsöffnung nahe dem Boden des Behälters (24) und oberhalb des Zulaufs (22) eine Austrittsöffnung aufweist.

9. Sicherungseinrichtung nach einem der vorhergehenden Ansprüche, **dadurch gekennzeichnet, dass** zwischen dem Druckausgleichsbehälter (33) und dem Auslass (35), insbesondere vor dem Druckschalter (38) zumindest ein Filter (36) vorgesehen ist.

10. Sicherungseinrichtung nach Anspruch 9, **dadurch gekennzeichnet, dass** der zumindest eine Filter (36) als ein Sedimentfilter, Aktivkohlefilter und/oder als ein mit einer UV-Lampe betriebener Filter ausgebildet ist.

11. Sicherungseinrichtung nach einem der vorhergehenden Ansprüche, **dadurch gekennzeichnet, dass** die Komponenten im Gehäuse (14) mit einer Steuerung überwachbar und/oder ansteuerbar sind und vorzugsweise eine Schnittstelle zur Ausgabe von Daten der Komponenten in einer Gehäusewand (39) des Gehäuses (14) vorgesehen ist.

12. Sicherungseinrichtung nach einem der vorhergehenden Ansprüche, **dadurch gekennzeichnet, dass** an dem Gehäuse (14) eine Anzeige für den Betriebszustand der Sicherungseinrichtung (12), für einen Schaltzustand des freien Auslaufs (21), für einen anliegenden Druck des Trinkwassers, für einen Betrieb der Pumpe (30) und/oder für einen Füllstand im Druckausgleichsbehälter (33) vorgesehen ist.

13. Sicherungseinrichtung nach einem der vorhergehenden Ansprüche, **dadurch gekennzeichnet, dass** zwischen dem Auslass (35) und einem Anschluss für das Gerät (52) ein Serviceventil (46) vorgesehen ist.

14. Sicherungseinrichtung nach einem der vorhergehenden Ansprüche, **dadurch gekennzeichnet, dass** der Einlass (15) und/oder der Auslass (35) am Gehäuse (14) durch einen Schnellverbindungsanschluss ausgebildet ist.

15. Verfahren zum Schutz von Trinkwasser gegen Verschmutzung durch Zurückfließen, **dadurch gekennzeichnet, dass** zwischen einem Anschluss an ein Trinkwassernetz und einen Vorratsbehälter (67) oder einen Verbraucher (71) eine Sicherheitseinrichtung (12) nach einem der Ansprüche 1 bis 14 eingesetzt wird.
